Europäisches Patentamt

European Patent Office

Office européen des brevets

(19)

(11) Numéro de publication: **0 120 725**
**B1**

(12) # FASCICULE DE BREVET EUROPÉEN

(45) Date de publication du fascicule du brevet:
**10.06.87**

(21) Numéro de dépôt: **84400242.8**

(22) Date de dépôt: **03.02.84**

(51) Int. Cl.⁴: **G 21 C 1/08,** H 05 B 3/04,
B 25 B 29/02, B 23 P 19/06

(54) **Dispositif de raccordement d'un élément plongeur à une enceinte à très haute pression, procédé de montage et de démontage du dispositif et vérin pour la mise en oeuvre du procédé.**

(30) Priorité: **04.02.83 FR 8301757**

(43) Date de publication de la demande:
**03.10.84 Bulletin 84/40**

(45) Mention de la délivrance du brevet:
**10.06.87 Bulletin 87/24**

(84) Etats contractants désignés:
**BE DE GB IT SE**

(56) Documents cité:
**EP-A-0 012 672
CH-A-474 010
DE-A-2 758 192
FR-A-2 065 512
FR-A-2 100 337
FR-A-2 118 222
FR-A-2 329 057
FR-A-2 387 732
FR-A-2 412 384
FR-A-2 437 680
GB-A-970 801
GB-A-989 168**

(73) Titulaire: **ELECTRICITE DE FRANCE Service National, 2, rue Louis Murat, F-75008 Paris (FR)**

(72) Inventeur: **Boissier, André, 3, rue Descamps, F-77300 Fontainebleau (FR)**
Inventeur: **Chabat- Courrede, Jean, 31, rue du Docteur Bergeron, F-77250 Moret- sur- Loing (FR)**
Inventeur: **Decaudin, Michel, 2, rue Messidor, F-77130 Cannes Ecluse (FR)**

(74) Mandataire: **Martin, Jean- Jacques, Cabinet REGIMBEAU 26, Avenue Kléber, F-75116 Paris (FR)**

LIBER, STOCKHOLM 1987

## Description

La présente invention concerne un procédé et dispositif pour raccorder un élément plongeur à une enceinte à très haute pression.

On sait que la régularisation de pression du circuit primaire des centrales nucléaires à eau pressurisée est assurée en partie par des éléments plongeurs chauffants ("cannes chauffantes") situés en partie basse du pressuriseur. Celle-ci a le plus souvent la forme d'une cuve en acier dont le fond est traversé par des éléments chauffants verticaux. A cet effet, le fond porte une série de manchettes tubulaires verticales dans lesquelles peuvent s'engager les éléments chauffants.

La difficulté technologique du problème tient au fait que l'enceinte du pressuriseur sur laquelle il s'agit de monter, par l'intermédiaire des manchettes, des éléments plongeurs chauffants, travaille à des pressions élevées (de l'ordre de 170 bars) et à des températures élevées (pouvant aller jusqu'à 350°C).

Pour les premières centrales nucléaires à eau pressurisée installées en France, les éléments plongeurs chauffants, métalliques, ont été assemblés par soudage sur les manchettes, une telle solution étant satisfaisante sur le plan de l'étanchéité et de la durabilité. Mais, en exploitation, une telle solution présente des inconvénients évidents: la dépose d'un élément chauffant, soit pour le contrôler, soit pour le remplacer, est longue et coûteuse puisqu'il faut détruire la soudure existante, ce qui peut endommager la manchette, et effectuer une nouvelle soudure. On remarquera de plus que les temps d'intervention ne peuvent être indûment prolongés sans de graves inconvénients, puisque le pressuriseur est "chaud", et que le personnel d'intervention est par conséquent soumis à une irradiation. De plus, une telle intervention (destruction puis nouvelle soudure) nécessite une nouvelle épreuve hydraulique (l'intégrité de l'enveloppe sous pression ayant été "modifiée" par la soudure), ceci compte-tenu de la réglementation en vigueur.

Dans ces conditions, il est apparu infiniment souhaitable de pouvoir monter et démonter très rapidement les éléments plongeurs chauffants dans les manchettes, d'une façon amovible, sans compromettre l'étanchéité du montage, l'intégrité de la manchette restant assurée dans toutes les phases opératoires.

De nombreux ensembles de raccordement démontables permettent en principe de résoudre le problème du montage étanche d'un tube dans un manchon. On connaît en particulier des raccords vissés dont le serrage entraîne la compression d'un joint.

On connaît en particulier, par le brevet EP-A1-0 012 672, un dispositif de raccordement d'un élément plongeur cylindrique ou tubulaire à une manchette tubulaire, notamment d'un élément plongeur chauffant à la manchette d'une cuve de pressuriseur, comportant une première bride associée à la manchette, une seconde bride associée à l'élément plongeur, un joint intercalé entre les deux brides, deux pièces tubulaires filetées, l'une mâle, l'autre femelle, coopérant entre elles par vissage, la pièce filetée mâle repoussant la première bride par l'intermédiaire de deux demi-bagues, la pièce filetée femelle repoussant la seconde bride, le vissage l'une dans l'autre des deux pièces tubulaires filetées provoquant la compression du joint.

En l'espèce, les essais conduits par la Demanderesse avec des ensembles de raccordement de ce type se sont montrés inopérants. En effet, le serrage, compte tenu des pressions en jeu, suppose des couples de serrage très importants qui risquent de provoquer la torsion de la manchette.

On connaît également par le brevet CH-A-474 010, un dispositif de raccordement étanche comprenant un joint de section en T, et des brides ayant chacune une portée de bout et une portée tronconique coopérant respectivement avec le corps et la barre du T, le joint pouvant être mis en précompression.

La présente invention se propose de résoudre le problème lié au dispositif de raccordement du brevet EP-A1-0 012 672 et également à permettre dans ce type de dispositif la mise en oeuvre d'une étanchéité du type du brevet CH-A-474 010.

A cet effet, le dispositif de raccordement de l'invention est caractérisé en ce que le joint est métallique et élastique et comporte une section en T, les brides ayant chacune une portée de bout et une portée tronconique coopérant respectivement avec le corps et la barre du T, en ce que la seconde bride comporte un épaulement de poussée à une extrémité du dispositif de raccordement, et en ce que l'élément fileté mâle comporte un rebord de poussée à l'autre extrémité du joint, de telle sorte que, par une action de serrage et de rapprochement de ces deux éléments, on puisse réaliser la précompression du joint.

De préférence, le rebord de la pièce tubulaire mâle se situe à l'aplomb de la paroi externe de la pièce filetée femelle.

L'invention concerne également un procédé de montage ou de démontage d'un dispositif de raccordement tel que défini ci-dessus, par une manoeuvre l'élément fileté femelle, caractérisé par une mise en précontrainte de serrage du dispositif par l'intermédiaire d'une part de la bride, d'autre part de la pièce filetée mâle, des deux demi-bagues et de la première bride de manchette, cette précontrainte amenant ou maintenant toutes ces pièces dans leur position normale de service préalablement à ladite manoeuvre de l'élément filetée femelle, de telle sorte que le montage ou le démontage se fait sans transmission du couple à la manchette.

L'invention concerne encore un vérin pour la mise en oeuvre du procédé, tel que défini ci-desus, caractérisé en ce qu'il comporte une embase et une contreplaque de poussée susceptible de s'écarter de l'embase sous l'effet d'ensembles de poussée, et des leviers pivotants d'accrochage, l'embase et la contreplaque étant munies d'une ouverture de passage pour l'élément plongeur du dispositif de raccordement, ladite contreplaque de poussée étant susceptible de venir en prise avec l'élément de poussée et les leviers pivotants d'accrochage étant susceptibles de venir en prise avec le rebord de poussée.

De préférence, il y a trois cylindres de poussée régulièrement répartis autour de l'axe central du vérin qui, en service, coincide avec l'axe de l'élément plongeur.

Les cylindres sont de préférence alimentés en fluide, par exemple de l'huile, sous une pression telle que la force du vérin est de plusieurs milliers de daN.

Selon un mode de réalisation avantageux, l'embase et la contreplaque sont munies de fentes latérales reliant les ouvertures centrales respectives à la périphérie de l'embase et de la contreplaque pour permettre l'introduction latérale du vérin sur l'élément plongeur et porter ce dernier dans l'axe des ouvertures.

Il est alors prévu de préférence un élément de fermeture monté pivotant sur le vérin pour libérer ou obturer lesdites fentes, et susceptible d'être verrouillé, tel que par goupillage, sur le vérin afin de refermer rigidement au moins l'embase autour du plongeur après introduction du vérin sur celui-ci.

La description qui va suivre et les dessins annexés auxquels elle se réfère, feront mieux comprendre comment l'invention peut être réalisée, les caractéristiques figurant dans la description ou apparaissant sur les dessins faisant bien entendu partie intégrante de la présente invention.

Sur les dessins annexés:
- la figure 1 représente en coupe verticale l'implantation d'une pluralité d'éléments chauffants sur un pressuriseur;
- la figure 2 représente en demi-vue de côté et en demi-coupe axiale un dispositif de raccordement selon l'invention;
- la figure 2a représente le joint du dispositif de raccordement de la figure 2, en coupe axiale transversale,
- la figure 3 représente selon les demi-plans de coupe référencés III-III sur la figure 3b le montage du dispositif de raccordement de la figure 2, à l'aide d'un vérin spécial;
- la figure 3a représente une vue de dessus selon les flèches A de la figure 3;
- la figure 3b représente une vue en coupe selon la ligne de coupe B-B de la figure 3.

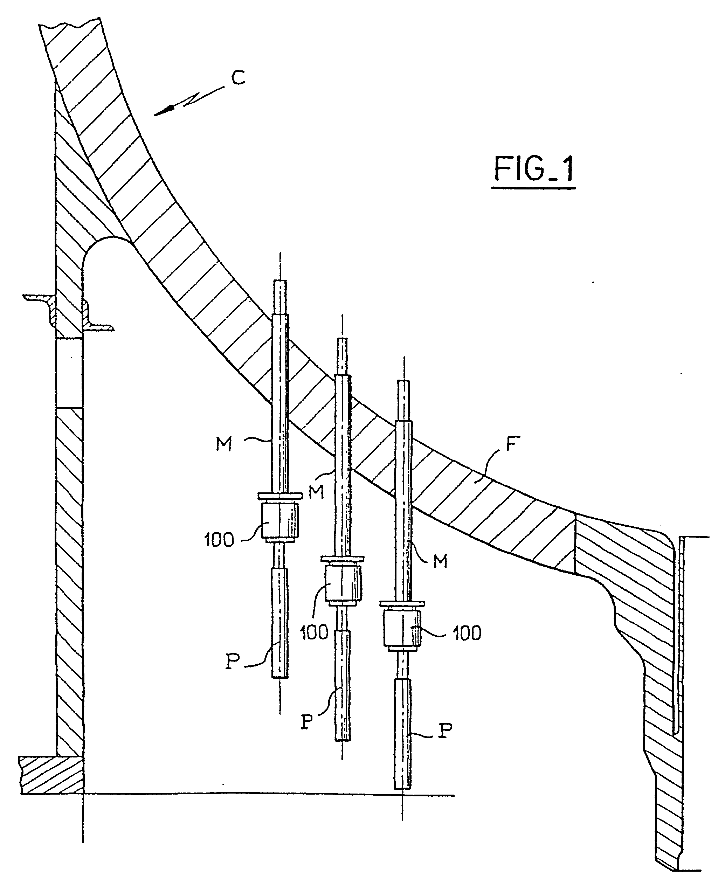

La figure 1 montre la cuve en acier C d'un pressuriseur. Une telle enceinte est remplie d'eau à une pression de service de 170 bars et des températures dépassant 300° C.

Le fond F de la cuve du pressuriseur est muni de manchettes tubulaires métalliques M soudées à la cuve. En général, comme représenté, les manchettes M sont disposées en groupes, par exemple en groupes de 7 manchettes voisines.

De ce fait, l'espace de travail autour de chacune des manchettes est mesuré.

Les éléments plongeurs chauffants P sont introduits dans les manchettes M et débouchent dans la cuve C du pressuriseur.

Dans la technique antérieure, de tels éléments chauffants sont soudés par leur chemisage externe métallique sur les manchettes M, elles-mêmes métalliques. Il apparaît que la pose et la dépose d'un tel élément soudé est une opération délicate et relativement longue, alors même que le personnel chargé de ces opérations est soumis à des radiations non négligeables.

Il est donc extrêmement souhaitable en pratique de disposer d'un système de raccordement amovible pour remplacer les soudures. Ce système doit être d'une mise en oeuvre simple et rapide, aussi bien au montage qu'au démontage. Il doit être réutilisable.

Enfin et surtout, il doit rester parfaitement étanche malgré les pressions et températures élevées indiquées ci-dessus.

La Demanderesse s'est livrée à de nombreuses études pour finalement mettre au point d'une part une structure de raccord vissé particulièrement avantageuse, et, d'autre part, un mode de montage et démontage spécifique pour un tel raccord.

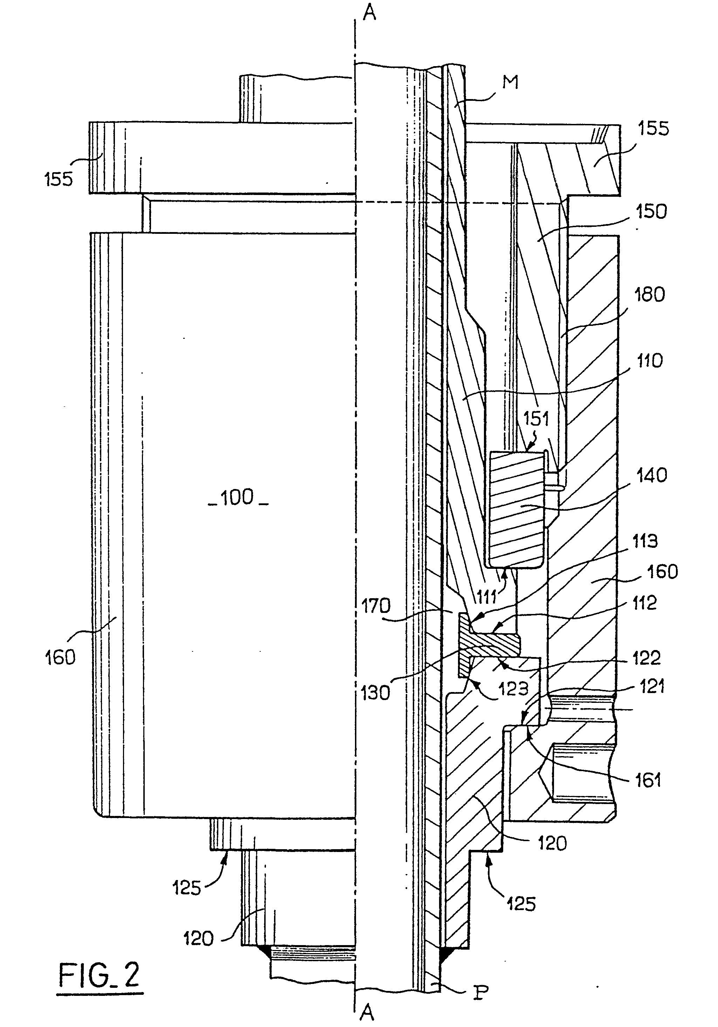

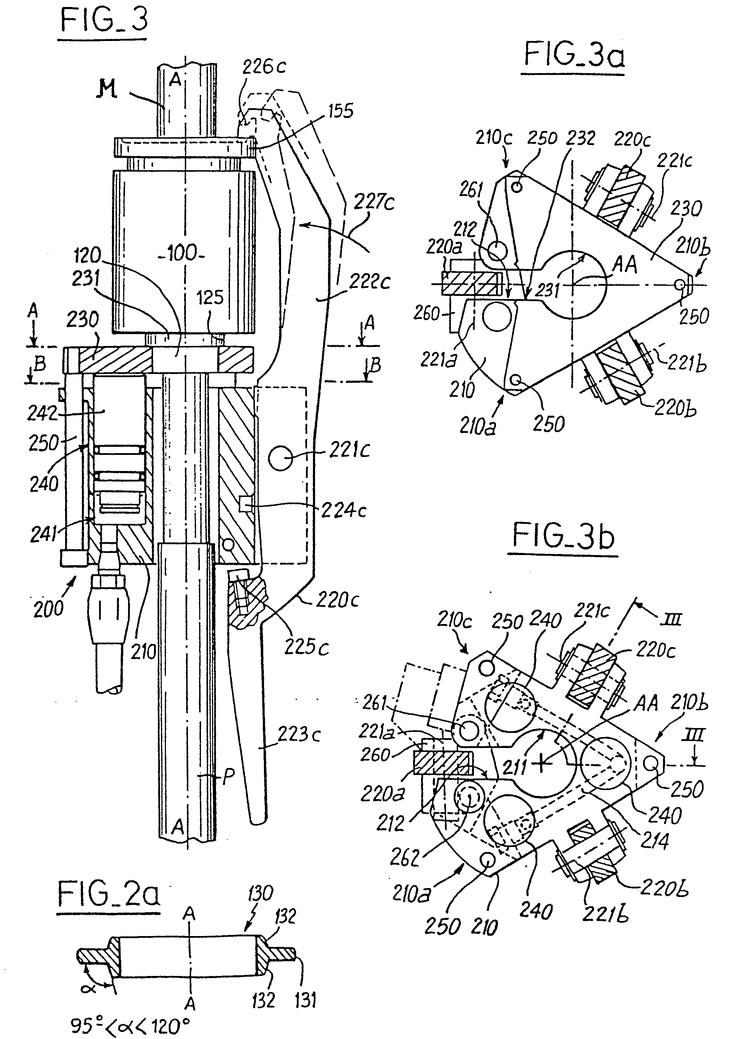

La figure 2 montre l'ensemble de raccordement particulier selon la présente invention. Cet ensemble 100, de révolution autour de l'axe central A-A de la manchette et du plongeur qu'il doit réunir comporte essentiellement une bride 110 solidaire de la manchette M, une bride 120 solidarisée, de façon étanche, par exemple par soudage, à l'élément plongeur P, un joint d'étanchéité 130 interposé entre les deux brides, deux demi-bagues de poussée, 140, coopérant avec la bride 110 par son épaulement 111, un élément mâle de vissage, 150, prenant appui par un épaulement 151 contre les demi-bagues de poussée 140, un élément femelle de vissage ou écrou, 160, coopérant avec le premier tout en prenant appui par son épaulement 161 sur un épaulement 121 de la bride 120. Dans le détail, on voit que les deux brides 110 et 120 comportent une portée de bout, perpendiculaire à l'axe A-A (112, 122), prolongée par une portée tronconique (113, 123) légèrement inclinée, par exemple d'une quinzaine de degrés sur l'axe A-A. Le joint 130 (figure 2a) a une section générale en forme de T, avec un corps central 131 et deux ailes latérales 132.

Le corps central 131 est pris entre les deux portées de bout 112 et 122. Les deux ailes 132 coopèrent avec les portées tronconiques 113 et 123 des deux brides 110 et 120. Lorsque les deux brides sont serrées dans le sens de l'axe A-A, l'étanchéité se trouve assurée à la fois par l'effet de serrage axial des portées de bout 112 et 122 sur le corps principal 131 et par l'effet de lèvres d'étanchéité des ailes 132 sur les portées 113 et 123 (serrage radial). On remarquera que la forme des brides 110 et 120 du côté de leur extrémité en contact avec le joint crée une chambre 170 formant cuvette de faible profondeur et dans laquelle est montée la partie débordante du joint 130 (ailes 132 formant la barre du T).

Toutes les pièces de l'ensemble de raccordement selon l'invention, y compris le joint 130, sont métalliques (acier de préférence) et de révolution autour de l'axe central A-A de la manchette M et du plongeur P qui y pénètre.

La pièce filetée mâle 150 et l'écrou ou pièce femelle 160 coopèrent par l'intermédiaire d'un filetage 180. La pièce filetée 150 possède un rebord d'accrochage et de poussée, 155 à un bout du raccord, alors que, à l'autre bout, la bride 120 possède un épaulement de poussée 125.

Le fonctionnement d'un tel ensemble est facile à comprendre: le vissage de l'écrou 160 sur la pièce filetée 155 provoque le rapprochement des deux pièces, entraînant d'un côté la bride 120, de l'autre côté les deux demi-bagues 140 et la bride 110, de telle sorte que les deux brides 110 et 120 se rapprochent en enserrant le joint 130, ce qui assure l'étanchéité comme on l'a indiqué par un mouvement axial qui induit un serrage radial.

On remarquera que la particularité principale de l'invention réside dans la forme particulière du joint 130 et des surfaces de celui-ci coopérant avec les portées de bout (112, 122), et tronconiques (113, 123).

La Demanderesse a essayé de nombreux types de joints, et seul le joint précité, dans la disposition précitée, a donné satisfaction, tant pour ce qui est de l'étanchéité, réalisée par des portées de bout et tronconiques, que de la restitution élastique importante des lèvres d'étanchéité, et ce pour un effort axial de serrage peu élevé.

On donnera ci-dessous trois séries d'essais montrant le comportement d'un tel système.

### Première série d'essais.

- Vérification de la restitution élastique: 10 cycles sont effectués sur presse, les résultats sont satisfaisants.
- Vérification de la tenue mécanique raccord/joint: 24 montages et démontages complets du même joint.
- Vérification de l'étanchéité:
Au cours des 24 tests ci-dessus, l'étanchéité est vérifiée après chaque remontage. Aucune fuite n'est décelée.
- Vérification en cyclages thermioues: 20 chocs thermiques sont effectués sur l'ensemble raccord/joint avec un $\Delta\theta$ de 230°C en 3 minutes pour les derniers essais.
- Vérification de l'étanchéité:
Au cours des essais en chocs thermiques aucune fuite n'est constatée.
- Démontage final.
L'ensemble des pièces est en parfait état.

### Deuxième série d'essais.

Les essais sont effectués cette fois sur un raccord dont les portées coniques d'étanchéité sont réalisées quasiment aux tolérances maximum admises par le constructeur, cela pour vérifier le comportement d'un ensemble raccord/joint conforme, mais à la limite des valeurs acceptables.
- Vérification du comportement mécanique à froid au montage avec joint neuf.
- Vérification en cyclages thermiques:
22 cycles thermiques sont effectués avec un $\Delta\theta$ de 175 à 200°C/heure.
- Vérificaticn en cyclages de pression:
Associés aux cyclages thermiques, des variations rapides de pression d'une amplitude de 140 bar.
- Vérification de l'étanchéité:
Au 10ème cycle avant démontage et après remontage du même ensemble: étanchéité satisfaisante.
Après le 22ème cycle: étanchéité satisfaisante.
- Démontage final:
Comportement satisfaisant de l'ensemble des pièces du raccord. Aucune trace de fuite n'est relevée.

### Troisième série d'essais.

Cet essai a pour but de déterminer la marge de sécurité (pression à laquelle il y a perte d'étanchéité).

L'ensemble raccord/joint est placé dans une étuve à une température de 320°C pendant 100 heures.

Pendant cette période, on soumet le raccord à des variations de pression (de la pression nominale de 156 bar à 310 bar, soit deux fois la pression de service) avec un passage à 330 bar et une température de 332°C.

A l'issue de cette série d'essais, on peut conclure que le raccord testé a une marge de sécurité $\geqslant$ à 100 % de la pression de fonctionnement pour une température de 320°C.

Il est essentiel d'éviter, lors du vissage de l'écrou 160 sur la pièce mâle homologue, 150, qu'un couple de torsion puisse être transmis à la manchette M.

Selon l'invention on résout ce problème par une précompression du dispositif de raccordement lors du montage.

En d'autres termes, on réalise, avant l'opération de vissage ou de dévissage, le rapprochement des deux brides 110 et 120 et la compression du joint 130, ce qui permet une opération de vissage ou de dévissage avec un couple très faible, de telle sorte qu'aucune torsion sensible ne se trouve transmise à la manchette M.

Compte tenu du peu d'espace disponible, comme on l'a signalé autour de chaque manchette, il est nécessaire de prévoir un système mécanique spécial dûment adapté, faisant partie de l'invention. Il s'agit pour l'essentiel d'un vérin 200, qui est représenté aux figures 3, 3a, 3b.

Le vérin 200 comporte essentiellement une embase 210, munie de leviers pivotants 220 permettant un accrochage sur le raccord, une contreplaque de poussée 230, des ensembles de poussée 240 (c'est-à-dire des ensembles pistons cylindres) étant interposés entre l'embase 210 et la contreplaque de poussée 230, des tiges de guidage 250 pour guider le mouvement relatif de la contreplaque de poussée 230 et de l'embase 210. On va décrire plus complètement ces divers éléments.

Comme on le voit plus particulièrement à la figure 3b, l'embase 210 possède en coupe une section sensiblement triangulaire à trois coins 210a, 210b, 210c, régulièrement répartis autour de l'axe central A-A (qui est également l'axe central de l'ensemble de raccordement et de l'élément plongeur sur lesquels le vérin est destiné à intervenir). En son centre, l'embase est munie d'une ouverture traversante circulaire 211 accessible latéralement, à l'opposé du coin 210b, par l'intermédiaire d'une fente axiale 212. Au droit des trois coins 210a, 210b, 210c, sont disposés trois ensembles de poussée 240 constitués chacun d'un cylindre 241 contenant un piston 242. L'alimentation des ensembles de poussée 240 se fait à l'aide d'un circuit hydraulique 214 sur lesquels les cylindres 241 sont montés en parallèle, une source de fluide, par exemple de l'huile sous pression (non représentée) pouvant être branchée sur le circuit d'alimentation 214. La contreplaque 230, que l'on voit mieux sur la figure 3a, possède, comme l'embase 210, une ouverture centrale 231, d'axe A-A et une fente d'accès 232. La contreplaque de poussée 230 se déplace par rapport à l'embase 210 sur des tirants verticaux 250 (voir figure 3 et figure 3a) de telle sorte que le mouvement relatif d'écartement ou de rapprochement (parallèlement à l'axe A-A) soit bien guidé.

Les fentes d'accès 212 et 232, précitées, prévues respectivement sur l'embase 210 et sur la contreplaque de poussée 230 permettent l'introduction latérale du vérin sur un système de raccordement 100.

Cependant, afin de renforcer le vérin, tout en évitant d'alourdir celui-ci, on peut prévoir un élément de fermeture 260 monté pivotant sur le vérin et plus précisément sur l'embase au voisinage desdites fentes d'accès 212 et 232, autour d'un axe 261 perpendiculaire à l'embase et à la contreplaque, l'élément de fermeture 260 étant susceptible d'être "verrouillé" sur l'embase 210, en position de fermeture des fentes d'accès grâce, par exemple, à une goupille 262 amovible traversant l'embase 210, perpendiculairement, et traversant également l'élément de fermeture 260. Sur la figure 3b, l'élément de fermeture est représenté en traits interrompus, en position ouverte, et en trait plein, en position fermée.

Un tel élément de fermeture 260 et sa goupille 262 associée ont pour but de refermer l'embase 210 autour du système de raccordement pour éviter tout risque de déformation intempestive par ouverture de celle-ci lors du travail du vérin. Une telle disposition permet bien entendu d'élever la force de précontrainte appliquée sur le système de raccordement.

On comprend facilement que lorsque les cylindres 241 sont alimentés en fluide, par exemple huile sous pression, les pistons 242 tendent à écarter la plaque de poussée 230 loin de l'embase 210, le rapprochement se faisant en relachement de la pression sous l'effet de ressorts non représentés.

Latéralement, l'embase 210 supporte à sa partie supérieure trois leviers pivotants 220a, 220b, 220c, montés pivotants autour d'axes 221a, 221b, 221c, en correspondance avec les côtés de l'embase (figures 3a et 3b). Les trois leviers pivotants ont une structure identique. On décrira celle du levier 220c représenté à la figure 3.

Ce levier comporte une partie centrale 222c articulée sensiblement en son milieu sur le pivot 221c. A son extrémité inférieure, la partie centrale 222c est prolongée par une poignée de manoeuvre 223c. Un ressort 224c, en partie logé dans l'embase 210 tend toujours à faire pivoter le levier 220c dans le sens de la flèche 227c. D'autre part, une butée fin de course 225c coopère avec l'embase pour limiter le déplacement du levier 220, contre l'action du ressort, sous l'effet d'une commande manuelle pressant la poignée 223c vers l'axe A-A. Enfin, à sa partie supérieure, le levier 220c est muni d'une griffe d'accrochage 226c.

La mise en oeuvre d'un tel vérin 200 se fait de la façon suivante. Il s'agit de venir précontraindre un système de raccordement 100, monté sur un élément plongeur vertical P, dans un environnement du type représenté à la figure 1 (forêt d'éléments verticaux les uns à côté des autres). Pour simplifier l'exposé, on supposera que les raccords 100 sont du type de ceux représentés à la figure 2, mais qu'il doit être entendu que, pour ce qui est de la précontrainte à l'aide d'un vérin, l'invention s'applique à tout système de raccord possèdant un joint élastique compressible (du type du joint 130), un rebord d'accrochage (du type référencé 155 sur la figure 2) et un épaulement de poussée (du type référencé 125 à la figure 2).

Dans un tel contexte, la mise en oeuvre du vérin 200 comporte d'abord l'introduction latérale du vérin (par l'intermédiaire des fentes 212-232), pour que son axe vienne coïncider avec l'axe A-A de l'ensemble de raccordement 100. Cette position axiale atteinte, l'opérateur referme l'élément 260 et le verrouille grâce à la goupille 262 lorsque ceux-ci sont prévus, puis remonte le vérin 200 le long de l'axe A-A, tout en maintenant serrées les trois poignées 223a, 223b, 223c, contre l'action de leur ressort d'armement (224a, 224b, 224c). Le vérin 200 n'est pas alimenté en fluide sous pression. Le mouvement de remontée se poursuit, l'orifice 231 de la contreplaque venant épouser la bride 120 et venir en butée avec son épaulement 125. La contreplaque 230 est rapprochée le plus possible de l'embase 210, et les griffes d'accrochage 226a, 226b, 226c, viennent à un niveau très légèrement supérieur à celui du rebord 155. On relâche les poignées 223a, 223b, 223c, de telle sorte que les griffes 226a, 226b, 226c, viennent après pivotement des leviers 220a, 220b, 220c, au-dessus du rebord 155, qui est à l'aplomb de la paroi de l'écrou 100.

Lorsqu'on met sous pression les ensembles de poussée 240, ils tendent à écarter la contreplaque 230 et l'embase 210. Comme la contreplaque est appliquée contre l'épaulement 125 de la bride 120, et que les leviers 220a, 220b, 220c, coopèrent par leurs griffes d'accrochage avec le rebord 155 de l'élément fileté mâle 150, ce mouvement d'écartement tend à comprimer le joint 130 qui se trouve pris entre la bride 120, d'une part, et d'autre part, la bride 110, elle-même repoussée par les deux demi-bagues 140 sous l'effet de l'entraînement de la pièce 150. On voit que l'actionnement du vérin 200 se traduit par une précompression (ou précontrainte) du joint, que l'on maintient, bien entendu, à la valeur convenable (la force axiale transmise au raccord doit être de quelques milliers de daN).

Dans cet état de précompression, il est facile de visser l'écrou 160 sur la pièce 150, jusqu'à sa position finale, sans avoir à fournir de couple important, et par conséquent sans transmettre aucun couple à la manchette M. Une telle opération est très rapide, précisément parce qu'un léger effort manuel suffit.

En pratique, la mise en oeuvre de joints conformes à la figure 2, à l'aide d'un vérin hyraulique a donné, pour le raccordement d'éléments chauffants sur des manchettes de pressuriseur, des résultats remarquables pour ce qui est de la fiabilité et de la rapidité de l'opération. Bien entendu, on utilise avantageusement aussi le vérin pour le démontage des raccords. Dans tous les cas, la mise en précompression du joint 130 précède la manoeuvre de l'écrou 160.

**Revendications**

1. Dispositif de raccordement d'un élément plongeur cylindrique ou tubulaire (P) à une manchette tubulaire (M), notamment d'un élément plongeur chauffant à la manchette d'une cuve de pressuriseur (C), comportant une première bride (110) associée à la manchette, une seconde bride (120) associée à l'élément plongeur, un joint (130) intercalé entre les deux brides, deux pièces tubulaires filetées, l'une mâle (150) l'autre femelle (160), coopérant entre elles par vissage la pièce filet de mâle repoussant la première bride par l'intermédiaire de deux-demi bagues (140), la pièce filetée femelle (160) repoussant la seconde bride (120), le vissage l'une dans l'autre des deux pièces tubulaires filetées (150, 160) provoquant la compression du joint (130) caractérisé en ce que le joint est métallique et élastique et comporte une section en T, les brides (110, 120) ayant chacune une portée de bout (112, 122) et une portée tronconique (113, 123) coopérant respectivement avec le corps et la barre du T, en ce que la seconde bride (120) comporte un épaulement de poussée (125) à une extrémité du dispositif de raccordement, et en ce que l'élément fileté mâle (150) comporte un rebord de poussée (155) à l'autre extrémité du joint, de telle sorte que, par une action de serrage et de rapprochement de ces deux éléments, on puisse réaliser la précompression du joint.

2. Un dispositif selon la revendication 1, caractérisé en ce que le rebord (155) de la pièce tubulaire mâle (150) se situe à l'aplomb de la paroi externe de la pièce filetée femelle (160).

3. Procédé de montage ou de démontage d'un dispositif de raccordement selon la revendication 1 ou 2, par une manoeuvre l'élément fileté femelle, caractérisé par une mise en précontrainte de serrage du dispositif par l'intermédiaire d'une part de la bride (120), d'autre part de la pièce filetée mâle (150), des deux demi-bagues (140) et de la première bride de manchette (110), cette précontrainte amenant ou maintenant toutes ces pièces dans leur position normale de service préalablement à ladite manoeuvre de l'élément fileté femelle (160), de telle sorte que le montage ou le démontage se fait sans transmission de couple à la manchette.

4. Procédé selon la revendication 3, caractérisé en ce que la précontrainte est appliquée à l'ensemble de raccordement par l'intermédiaire d'un vérin spécial.

5. Vérin pour la mise en oeuvre du procédé selon la revendication 4, caractérisé en ce qu'il comporte une embase (210) et une contreplaque de poussée susceptible de s'écarter de l'embase sous l'effet d'ensembles de poussée, et des leviers pivotants d'accrochage (220a, 220b, 220c), l'embase et la contreplaque étant munies d'une ouverture de passage (211, 231) pour l'élément plongeur du dispositif de raccordement, ladite contreplaque de poussée étant susceptible de venir en prise avec l'épaulement de poussée (125) et les leviers pivotants d'accrochage étant susceptibles de venir en prise avec le rebord de poussée (155).

6. Un vérin selon la revendication 5, caractérisé par des fentes latéraies (212, 232) permettant l'introduction latérale du vérin pour que l'élément plongeur (P) vienne dans l'axe des ouvertures (211, 231).

7. Un vérin selon l'une des revendications 5 et 6, caractérisé en ce que l'embase et la contreplaque (130) ont une forme générale triangulaire et en ce qu'il y a trois ensembles de poussée (240) régulièrement répartis autour de l'axe du dispositif.

8. Un vérin selon l'une des revendications 5 à 7, caractérisé en ce que les ensembles de poussée (240) sont alimentés en fluide sous pression.

9. Un vérin selon l'une des revendications 5 à 8, caractérisé en ce que les leviers pivotants (220a, 220b, 220c) sont armés par des ressorts (224a, 224b, 224c) qui tendent toujours à les ramener en position d'accrochage.

10. Un vérin selon l'une des revendications 5 à 9, caractérisé en ce que les leviers pivotants (220a, 220b, 220c) sont terminés par des poignées de manoeuvre (223a, 223b, 223c) permettant un serrage manuel écartant les leviers de leur position d'accrochage.

11. Un vérin selon la revendication 6, caractérisé par un élément de fermeture (260) monté pivotant sur le vérin (200) pour libérer ou obturer les fentes (212, 232) et susceptible d'être verrouillé sur l'embase (210) afin de refermer rigidement celle-ci autour de l'élément plongeur.


**Patentansprüche**

1. Gerät zur Verbindung eines zylindrischen oder rohrförmigen Eintauchelementes (P) mit einem Rohrstutzen (M), insbesondere zur Verbindung eines Eintauchelementes mit dem Stutzen eines Hochdruckgefässes (C), das ein mit dem Stutzen verbundenes erstes Anschlusstück (110) aufweist, sowie ein mit dem Eintauchelement verbundenes zweites Anschlusstück (120), eine zwischen den beiden Anschlusstücken angeordnete Dichtung (130), zwei rohrförmige Gewindeteile, das eine mit einem Aussengewinde (150), das andere mit einem Innengewinde (160), die durch Verschraubung zusammenwirken, wobei das Aussengewinde (150) das erste Anschlusstück über zwei Halbringe (140) zurückschiebt, während das Innengewinde (160) das zweite Anschlusstück (120) zurückschiebt und die Verschraubung der beiden rohrförmigen Gewindeteile (150, 160) miteinander ein Zusammendrücken der Dichtung (130) bewirkt,
dadurch gekennzeichnet, dass
die Dichtung ein elastisches Metallteil ist, das einen T-förmigen Abschnitt aufweist und die Anschlusstücke (110, 120) jeweils einen Kopfsitz (112, 122) und einen kegelstumpfartigen Sitz (113, 123) aufweisen, die jeweils mit dem Körper des T-Stückes zusammenwirken, und dass das zweite Anschlusstück (120) einen Schubansatz (125) an einem Ende des Verbindungsgerätes aufweist, und dass das Aussengewinde (150) eine Schubleiste (155) am anderen Ende der Dichtung aufweist, so dass durch Festziehen und Annäherung dieser beiden Elemente ein Vorpressen der Dichtung erreicht werden kann.

2. Gerät nach Anspruch 1,
dadurch gekennzeichnet, dass die Leiste (155) des rohrförmigen Aussengewindes (150) senkrecht zur Aussenwand des Innengewindes (160) angeordnet ist.

3. Verfahren für die Montage oder Demontage eines Verbindungsgerätes nach einem der Ansprüche 1 oder 2 durch Betätigung des Innengewindes,
dadurch gekennzeichnet, dass
das Gerät einerseits über das Anschlussteil (120) und andererseits über das Aussengewinde (150), die beiden Halbringe (140) und über das erste Anschlusstück mit einer Vorspannung beaufschlagt wird, die alle diese Teile vor Betätigung des Innengewindes (160) in ihre normale Betriebsstellung bringt oder sie dort hält, so dass die Montage oder Demontage ohne Übertragung eines Momentes auf den Stutzen erfolgen kann.

4. Verfahren nach Anspruch 3,
dadurch gekennzeichnet, dass
die Vorspannung mittels einer speziellen Winde auf den Verbindungszusammenbau aufgebracht wird.

5. Winde für die Durchführung des Verfahrens nach Anspruch 4,
dadurch gekennzeichnet, dass
sie ein Anschlusstück (210) und eine Schubplatte, die sich unter der Wirkung von Schubvorrichtungen von dem Anschlusstück abspreizen kann, sowie angelenkte Befestigungshebel (220a, 220b, 220c) aufweist, wobei das Anschlusstück und die Schubplatte mit einer Durchgangsöffnung (211, 231) für das Eintauchelement des Verbindungsgerätes versehen sind und die Schubplatte in den Schubansatz (125) eingreifen kann, während die angelenkten Befestigungshebel mit der Schubleiste (155) in Eingriff treten können.

6. Winde nach Anspruch 5,
dadurch gekennzeichnet, dass
seitliche Schlitze (212, 232) vorgesehen sind, die ein seitliches Einschieben der Winde erlauben, damit sich das Eintauchelement (P) in die Achse der Öffnungen (211, 231) bewegt.

7. Winde nach einem der Ansprüche 5 und 6,
dadurch gekennzeichnet, dass
das Anschlusstück und die Schubplatte (130) eine weitgehend dreieckige Form haben und dass drei Schubvorrichtungen (240) vorgesehen sind, die gleichmässig verteilt um die Achse des Gerätes angeordnet sind.

8. Winde nach einem der Ansprüche 5 bis 7,
dadurch gekennzeichnet, dass
die Schubvorrichtungen (240) mit einem bedrückten Fluid betätigt werden.

9. Winde nach einem der Ansprüche 5 bis 8,
dadurch gekennzeichnet, dass
die Gelenkhebel (220a, 220b, 220c) mit Federn (224a, 224b, 224c) ausgerüstet sind, die sie immer wieder in Eingriffsstellung zurückbringen.

10. Winde nach einem der Ansprüche 5 bis 9,
dadurch gekennzeichnet, dass
die Gelenkhebel (220a, 220b, 220c) an ihren Enden Betätigungsgriffe (223a, 223b, 223c) aufweisen, die ein manuelles Festziehen erlauben, um die Hebel aus ihrer Eingriffsstellung zu bewegen.

11. Winde nach Anspruch 6,
dadurch gekennzeichnet, dass
ein Verschlusselement (260) gelenkig an der Winde (200) montiert ist, um die Schlitze (212, 232) freizulegen oder zu verschliessen und das auf dem Anschlusstück (210) verriegelt werden kann, um dieses steif um das Eintauchelement zu schliessen.

**Claims**

1. A device for connecting a cylindrical or tubular plunger element (P) to a tubular collar (M), more especially a heating plunger element to the collar of a pressurizer tank (C), comprising a first flange (110) associated with the collar, a second flange (120) associated with the plunger element, a seal (130) disposed between the two flanges, two screwthreaded tubular elements, one male (150) and the other female (160), co-operating with one another through screwing the male screwthreaded element pushing away the first flange through two half-rings (140), the female screwthreaded element (160) pushing away the second flange (120), the screwing of one of the two screwthreaded elements (150,160) causing the seal (130) to be compressed, characterized in that the seal is metallic and elastic and has a T-form cross-section, the flanges (110,120) each having an end bearing surface (112,122) and a frustoconical bearing surface (113,123) co-operating respectively with the body and the bar of the T, in that the second flange (120) comprises a thrust shoulder (125) at one end of the connecting device and in that the male screwthreaded element (150) comprises a thrust rim (155) at the other end of the seal so that, by tightening these two elements and bringing them together, the seal can be precompressed.

2. A device as claimed in Claim 1, characterized in that the rim (155) of the male tubular element (150) is located level with the outer wall of the female screwthreaded element (160).

3. A method for assembling or dismantling the connecting device claimed in Claim 1 or 2 by actuation of the female screwthreaded element, characterized by a tightening prestressing of the device through, on the one hand, the flange (120) and, on the other hand, the male screwthreaded element (150), the two half-rings (140) and the first flange (110), this prestressing bringing all these components into or holding them in their normal operating position prior to said actuation of the female screwthreaded element (160) so that device may be assembled or dismantled without any torque being transmitted to the collar.

4. A method as claimed in Claim 3, characterized in that the prestressing is applied to the connecting device by a special jack.

5. A jack for carrying out the method claimed in Claim 4, characterized in that it comprises a base (210) and a thrust plate designed to move away from the base under the effect of thrust units and pivotal coupling levers (220a, 220b, 220c), the base and the plate being provided with an opening (211, 231) for the passage of the plunger element of the coupling device, said thrust plate being designed to come into engagenent with the thrust shoulder (125) and the pivotal coupling levers being designed to come into engagement with the thrust rim (155).

6. A jack as claimed in Claim 5, characterized in that it comprises lateral slots (212, 232) for lateral introduction of the jack so that the plunger element (P) comes into alignment with the openings (211, 231).

7. A jack as claimed in Claim 5 or 6, characterized in that the base and the plate (130) are generally triangular in shape and in that there are three thrust units (240) distributed uniformly around the axis of the device.

8. A jack as claimed in any of Claims 5 to 7, characterized in that the thrust units (240) are fed with fluid under pressure.

9. A jack as claimed in any of Claims 5 to 8, characterized in that the pivotal levers (220a 220b 220c) are biassed by springs (224a, 224b, 224c) which tend always to return them to the coupling position.

10. A jack as claimed in any of Claims 5 to 9, characterized in that the pivotal levers (220a, 220b, 220c) terminate in operating handles (223a, 223b, 223c) for manual tightening, taking the levers out of their coupling position.

11. A jack as claimed in Claim 6, characterized by a closure element (260) pivotally mounted on the jack (200) to open or close the slots (212, 232) and designed to be bolted to the base (210) so that the base is rigidly closed around the plunger element.

FIG_1

0 120 725

FIG_2

FIG_3

FIG_3a

FIG_3b

FIG_2a

$95° < \alpha < 120°$